(19) Europäisches Patentamt / European Patent Office / Office européen des brevets

(11) **EP 3 936 300 A1**

(12) **EUROPÄISCHE PATENTANMELDUNG**

(43) Veröffentlichungstag:
**12.01.2022 Patentblatt 2022/02**

(21) Anmeldenummer: **21183998.0**

(22) Anmeldetag: **06.07.2021**

(51) Int Cl.:
*B29C 45/00* (2006.01)  *A01G 9/02* (2018.01)
*B29C 45/37* (2006.01)  *B29L 31/00* (2006.01)
*B29K 105/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **08.07.2020 DE 102020117954**

(71) Anmelder: **Orga.nico GmbH & Co. KG**
**02694 Grossdubrau (DE)**

(72) Erfinder:
• **Friedrich, Uwe**
  **02694 Großdubrau (DE)**
• **Franke, Jonathan**
  **01099 Dresden (DE)**
• **Süß, Michael**
  **01159 Dresden (DE)**

(74) Vertreter: **Steiniger, Carmen**
**Patentanwaltskanzlei Dr. Steiniger**
**Reichsstraße 37**
**09112 Chemnitz (DE)**

(54) **BEHÄLTNIS UND SPRITZGIESSVORRICHTUNG ZUR HERSTELLUNG WENIGSTENS EINES BEHÄLTNISSES**

(57) Die vorliegende Erfindung betrifft ein Behältnis (1), das spritzgegossen ist und dessen Wand (2) von einem Boden (3) des Behältnisses bis zu einem Öffnungsrand (4) des Behältnisses verlaufende, einander abwechselnde erste (5) und zweite Materialstreifen (6) aufweist, wobei die ersten Materialstreifen (5) eine erste Streifenbreite (bi ) und eine erste Wanddicke (d1) und die zweiten Materialstreifen (6) eine zweite Streifenbreite (b2) und eine zweite Wanddicke (d2) aufweisen, wobei die zweite Wanddicke (d2) größer als die erste Wanddicke (d1) ist, und wobei die ersten und die zweiten Materialstreifen in Übergangsbereichen (7) seitlich miteinander verbunden sind, dadurch gekennzeichnet, dass die zweite Streifenbreite (b2) größer als die zweite Wanddicke (d2) ist, die zweite Wanddicke (d2) kleiner oder gleich dem Doppelten der ersten Wanddicke (d1) ist und das Produkt aus der ersten Streifenbreite (b1) und dem Verhältnis der ersten Wanddicke (d1) zu der zweiten Wanddicke (d2) unter der Bedingung, dass die erste Streifenbreite (b1), die erste Wanddicke (d1) und die zweite Wanddicke (d2) in mm angegeben sind, in einem Bereich von 2 mm bis 50 mm liegt.

Die Erfindung betrifft außerdem eine entsprechend ausgebildete Spritzgießvorrichtung zur Herstellung eines solchen Behältnisses.

Fig. 1

EP 3 936 300 A1

**Beschreibung**

Die vorliegende Erfindung betrifft ein Behältnis, das spritzgegossen ist und dessen Wand von einem Boden des Behältnisses bis zu einem Öffnungsrand des Behältnisses verlaufende, einander abwechselnde erste und zweite Materialstreifen aufweist, wobei die ersten Materialstreifen eine erste Streifenbreite und eine erste Wanddicke und die zweiten Materialstreifen eine zweite Streifenbreite und eine zweite Wanddicke aufweisen, wobei die zweite Wanddicke größer als die erste Wanddicke ist, und wobei die ersten und die zweiten Materialstreifen in Übergangsbereichen seitlich miteinander verbunden sind. Die Erfindung betrifft außerdem eine Spritzgießvorrichtung zur Herstellung wenigstens eines Behältnisses, wobei die Spritzgießvorrichtung eine Form mit einem ersten Hohlraum aufweist, der einander abwechselnde und in Übergangsabschnitten seitlich miteinander verbundene, erste und zweite Hohlraumabschnitte aufweist, wobei die ersten Hohlraumabschnitte eine erste Abschnittsbreite und eine erste Abschnittsdicke aufweisen und die zweiten Hohlraumabschnitte Fließhilfen sind und eine zweite Abschnittsbreite und eine zweite Abschnittsdicke aufweisen, wobei die zweite Abschnittsdicke größer als die erste Abschnittsdicke ist.

Im Spritzgussprozess werden mitunter schwer fließfähige Spritzgussmassen zur Herstellung von Erzeugnissen verwendet. Um damit entsprechende Formteile herzustellen, sind infolgedessen Wandstärken notwendig, die ein ausreichend gutes Fließen der Spritzgussmasse garantiert. Daraus ergibt sich, dass die Wandstärke der Formteile ein bestimmtes Minimum nicht unterschreiten darf, da sonst die Formfüllung des Teils unvollständig ist.

Der Nachteil dieser vergleichsweise dickeren Wandstärke ist, dass entsprechend viel Material verspritzt werden muss, was wiederum preisintensiver ist. Zudem ergibt sich durch die höhere Wandstärke speziell bei biologisch abbaubaren Produkten eine längere Zeitdauer für die Materialzersetzung.

Aus der Druckschrift DE 10 2012 103 082 A1 ist ein aus Kunststoff gespritztes Behältnis bekannt, das aus Fließhilfen resultierende Wülste aufweist, die schräg orientiert, aber nicht überkreuzend an der Seitenwand des Behältnisses angeordnet sind. Die Wülste gehen von einer Bodenfläche des Behältnisses aus und schließen an einer Oberkante des Behältnisses ab. Durch Fließhilfen wird während des Spritzgießens des Behältnisses der Schmelzfluss in Fließrichtung erleichtert, wodurch die Verfüllung verbessert wird und dünnwandige Behältnisse realisierbar sind. Eine Ausrichtung der Fließhilfen in Fließrichtung ist nicht unbedingt erforderlich.

In der Druckschrift DE 10 2012 103 082 A1 kommt ein einfacher, spritzgussfähiger Kunststoff zur Ausbildung des Behältnisses zum Einsatz. Solche Kunststoffe sind meist nicht recycelbar. Es besteht jedoch gerade aus umweltschonenden Gesichtspunkten im landwirtschaftlichen Bereich zunehmend Bedarf an Pflanztöpfen, die sich biologisch zersetzen. Als biologisch abbaubare Kunststoffe sind beispielsweise Polyactide bekannt, welchen biologische Füllstoffe zur Erhöhung der Steifigkeit und Festigkeit der damit gespritzten Produkte zugesetzt werden können. Solche mit Füllstoffen versetzten Kunststoffe sind zwar grundsätzlich für das Spritzgießen geeignet, jedoch bilden sich aufgrund der durch die Feststoffpartikel verschlechterten Fließeigenschaften im fertigen Produkt inhomogene Bereiche, insbesondere bei dünnwandigen Produkten. Um in diesen Fällen den formgebenden Hohlraum während des Spritzgießprozesses gleichmäßig füllen zu können, muss dieser besonders groß dimensioniert werden. Umso größer der formgebende Hohlraum ist, desto mehr Material muss eingespritzt werden. Dementsprechend steigen durch den hohen Materialeinsatz die Produktionskosten.

Aus der Druckschrift JP 2006-1569 A ist ein spritzgegossener Pflanztopf mit einer durchgehenden dünnen Wand, auf der sich vertikal erstreckende Rippenstrukturen ausgebildet sind, bekannt. Die als mechanische Verstärkungsstrukturen dienenden Rippenstrukturen besitzen einen im Wesentlichen dreieckigen Querschnitt, wobei die sich in Umfangsrichtung des Pflanztopfes erstreckende Breite der Rippenstrukturen etwa halb so groß wie deren von der Oberfläche des Pflanztopfes seitlich nach außen ragende Dicke bzw. Höhe ist. Die Rippenstrukturen sind etwa dreimal so dick wie die dünnwandigen Wandbereiche des Pflanztopfes.

Die Druckschrift WO 97/23334 A1 beschreibt einen gespritzter Anzuchttopf aus biologisch abbaubarem Material, der aus einem gitterförmigen und mechanisch belastbaren Formkörper ausgebildet ist, der durch eine Folie oder Dünnschicht zu dem Anzuchttopf vervollständigt ist. Der Formkörper weist einen Topfboden und einen Topfrand auf, die über fünf voneinander gleichmäßig beabstandete, umfangsseitig angeordnete Rippen, die dem Formkörper die Gitterstruktur geben, miteinander verbunden sind. Der Zwischenraum zwischen den Rippen ist mit der Folie oder Dünnschicht ausgelegt oder überdeckt. Am Topfboden sind die Rippen als radiale Verstärkungsholme fortgeführt.

Es ist daher die Aufgabe der vorliegenden Erfindung, ein spritzgegossenes Behältnis und eine Spritzgießvorrichtung für dessen Herstellung zur Verfügung zu stellen, wobei das Behältnis unter Verwendung der Spritzgießvorrichtung auch bei Verwendung eines Spritzgussmaterials mit geringer Fließfähigkeit kostengünstig gefertigt werden kann.

Diese Aufgabe wird zum einen durch ein Behältnis gelöst, das spritzgegossen ist und dessen Wand von einem Boden des Behältnisses bis zu einem Öffnungsrand des Behältnisses verlaufende, einander abwechselnde erste und zweite Materialstreifen aufweist, wobei die ersten Materialstreifen eine erste Streifenbreite und eine erste Wanddicke und die zweiten Materialstreifen eine zweite Streifenbreite und eine zweite Wanddicke aufweisen, wobei die zweite Wanddicke größer als die erste Wanddicke ist, und wobei die ersten und die zweiten Materialstreifen in Übergangsbereichen seitlich miteinander verbunden sind, wobei die zweite Streifenbreite größer als die zweite Wanddicke ist, die zweite Wanddicke ≤ dem Doppelten der ersten Wanddicke ist und das Produkt aus der ersten Streifenbreite und dem Verhältnis der ersten Wanddicke zu der zweiten Wanddicke unter der Bedingung, dass die erste Streifenbreite, die erste Wanddicke und die zweite Wanddicke in mm angegeben sind, in einem Bereich von 2 mm bis 50 mm liegt.

In einer bevorzugten Ausführungsform des erfindungsgemäßen Behältnisses ist dieses ein Pflanztopf, kann jedoch auch ein anderer spritzgegossener Gegenstand, wie beispielsweise ein Trinkbecher oder ein Pflanzkasten, sein.

Das erfindungsgemäße Behältnis weist vorzugsweise einen kreisrunden Querschnitt auf. Es kann jedoch auch einen ovalen, dreieckigen, rechteckigen oder vieleckigen Querschnitt aufweisen. Der Querschnitt des Behältnisses kann auch wellig ausgebildet und/oder unsymmetrisch sein.

Die Wand des erfindungsgemäßen Behältnisses setzt sich aus unterschiedlichen ersten und zweiten Materialstreifen mit dazwischen befindlichen Übergangsbereichen zusammen. Alle ersten Materialstreifen weisen jeweils die gleiche Form auf, und alle zweiten Materialstreifen weisen jeweils die gleiche Form auf. Die ersten und zweiten Materialstreifen wechseln sich stetig ab und sind an den Übergangsbereichen miteinander verbunden.

Der Querschnitt des Behältnisses kann sich ausgehend von dem Öffnungsrand des Behältnisses bis hin zum Boden ändern. Entsprechend können die erste Streifenbreite der ersten Materialstreifen und die zweite Streifenbreite der zweiten Materialstreifen ausgehend von dem Öffnungsrand des Behältnisses bis hin zum Boden des Behältnisses abnehmen, zunehmen oder auch gleich bleiben. Die erste Streifenbreite der ersten Materialstreifen kann sowohl kleiner als auch größer sowie gleich der zweiten Streifenbreite der zweiten Materialstreifen sein.

Die Wand des Behältnisses ist mit dem Boden des Behältnisses verbunden. Vorzugsweise verlaufen die ersten und zweiten Materialstreifen geradlinig von dem Öffnungsrand des Behältnisses bis hin zum Boden des Behältnisses.

Die ersten und die zweiten Materialstreifen unterscheiden sich untereinander in ihrer Wanddicke. Dabei ist die zweite Wanddicke, also die Wanddicke der zweiten Materialstreifen, größer als die erste Wanddicke, also die Dicke der dünnwandigen ersten Materialstreifen. Die Übergangsbereiche weisen eine sich ausgehend von den zweiten Materialstreifen bis hin zu den ersten Materialstreifen verringernde dritte Wanddicke auf.

Die zweiten Materialstreifen sind Fließhilfsmaterialstreifen. Sie unterscheiden sich geometrisch von aus dem Stand der Technik bekannten, in Spritzgussverfahren ausgebildeten Rippenstrukturen dadurch, dass zum einen die zweite Streifenbreite größer als die zweite Wanddicke der zweiten Materialstreifen ist und zum anderen die zweite Wanddicke der zweiten Materialstreifen ≤ dem Doppelten der ersten Wanddicke der ersten Materialstreifen ist.

Die zweiten Materialstreifen sind mit den Eintrittspunkten der Spritzmasse in die Spritzgießvorrichtung verbundene Strukturen, mit welchen das Fließen der Spritzmasse im

Werkzeug vereinfacht und das Füllen kritischer Bereiche im verwendeten Formteil ermöglicht wird. So kann bei der vorliegenden Erfindung durch die speziell dimensionierten zweiten Materialstreifen das Behältnis mit insgesamt dünnen Wandstärken gespritzt werden.

Beidseitig der zweiten Materialstreifen geht deren zweite Wanddicke in die erste Wanddicke der flächigen, dünnwandigen, ersten Materialstreifen über. Dieser Übergang zwischen den Wanddicken ist über eine Länge von ≤ 2 mm abgeschlossen.

Während des Spritzgießens des Behältnisses fließt das jeweils verwendete Spritzgießmaterial ausgehend von einem den Boden des Behältnisses ausbildenden Bereich in die auszubildende Wand des Behältnisses. Da die zweiten Materialstreifen dicker als die ersten Materialstreifen sind, breitet sich während des Spritzgießens das Spritzgießmaterial in den Bereichen, in welchen die zweiten Materialstreifen ausgebildet werden, schneller aus als in den Bereichen, in welchen die ersten Materialstreifen ausgebildet werden. Das heißt, dadurch, dass die Bereiche, in welchen die zweiten Materialstreifen ausgebildet werden, gegenüber den Bereichen, in welchen die ersten Materialstreifen ausgebildet werden, eine größere Wanddicke aufweisen, ist die Ausbreitungsgeschwindigkeit des Spritzgießmaterials in den Bereichen, in welchen die zweiten Materialstreifen ausgebildet werden, gegenüber den Bereichen, in welchen die ersten Materialstreifen ausgebildet werden, erhöht. Von den Bereichen, in welchen die zweiten Materialstreifen ausgebildet werden, gelangt das Spritzgießmaterial über die Übergangsbereiche in die Bereiche, in welchen die ersten Materialstreifen ausgebildet werden.

Das Verhältnis zwischen dicker (zweiter) und dünner (erster) Wanddicke sowie Größe bzw. Fließlänge in den dünneren, ersten Materialstreifen ist einflussgebend darauf, ob die Formfüllung funktioniert. Das heißt, zu geringe Wanddicken der zweiten Materialstreifen sowie zu lange, dünne, neben den als Fließhilfenmaterialstreifen fungierenden zweiten Materialstreifen befindliche erste Materialstreifen können zu Fehlstellen führen.

Erfindungsgemäß ergeben sich dann optimale Eigenschaften des Behältnisses, wenn die oben angegebene Bedingung erfüllt ist, nach welcher das Produkt aus der ersten Streifenbreite und dem Verhältnis der ersten Wanddicke zu der zweiten Wanddicke in einem Bereich von 2 mm bis 50 mm liegt. Mit anderen Worten: Wenn man die erste Wanddicke der ersten Materialstreifen durch die zweite Wanddicke der zweiten Materialstreifen dividiert und den daraus erhaltenen Quotienten mit der ersten Streifenbreite der ersten Materialstreifen multipliziert, dann darf zur Erfüllung der oben genannten Bedingung das daraus erhaltene Endergebnis - bei Verwendung gleicher Maßeinheiten, nämlich mm, - nicht kleiner als 2 mm und nicht größer als 50 mm sein.

Daraus ergibt sich eine Formel für einen Fließhilfenfaktor FHF, die das Verhältnis aus der ersten Wanddicke $d_1$ der dünnwandigen ersten Materialstreifen und der zweiten Wanddicke $d_2$ der zweiten Materialstreifen sowie der Streifenbreite $b_1$ der ersten Materialstreifen, also der Länge der dünnwandigen ersten Materialstreifen normal zur Fließhilfenflanke, wie folgt widerspiegelt:

$$FHF = \frac{d_1}{d_2} \cdot b_1$$

wobei 2 mm $\leq$ FHF $\leq$ 50 mm ist.

Die erste Wanddicke der ersten Materialstreifen, die zweite Wanddicke der zweiten Materialstreifen und die erste Streifenbreite der ersten Materialstreifen sind in der oben angegeben Formel in dergleichen Maßeinheit, nämlich in Millimeter, angegeben.

Daraus lässt sich ableiten, dass bei großer erster Streifenbreite im Verhältnis zur zweiten Streifenbreite zur Erfüllung der Bedingung, nach welcher das Produkt aus der ersten Streifenbreite und dem Verhältnis der ersten Wanddicke zu der zweiten Wanddicke in einem Bereich von 2 mm bis 50 mm liegt, die zweite Wanddicke der zweiten Materialstreifen entsprechend zu erhöhen ist. Umgekehrt gilt, dass dann, wenn die erste Streifenbreite kleiner als die zweite Streifenbreite ist, die zweite Wanddicke geringer ausgebildet werden kann.

Sofern sich das oben genannte Endergebnis innerhalb des Bereiches von 2 mm bis 50 mm befindet, sind die ersten und zweiten Materialstreifen so dimensioniert, dass sich das Spritzgießmaterial insbesondere auch in den Bereichen, in welchen die ersten Materialstreifen ausgebildet werden, ausbreitet und die ersten Materialstreifen homogen ausgebildet werden. Dies kann erfindungsgemäß auch dann erreicht werden, wenn die ersten Materialstreifen besonders dünn sind. Durch entsprechende Dimensionierung des Behältnisses können somit besonders dünnwandige Behältnisse hergestellt werden, wodurch Spritzgießmaterial eingespart werden kann.

Ein weiterer Vorteil der Erfindung ist, dass durch entsprechende Dimensionierung des Behältnisses, vor Beginn der Fertigung, die sonst üblicherweise vorgenommenen Probeversuche entfallen, da die Erfüllung der obigen Bedingung selbst bei Verwendung sehr geringer Materialmengen zu einem hochqualitativen Behältnis führt. Dadurch werden Produktionskosten gering gehalten.

In einer vorteilhaften Ausführungsform der vorliegenden Erfindung ist das Behältnis aus biologisch abbaubarem Material ausgebildet, das aus wenigstens einem biologisch abbaubaren Kunststoff und wenigstens einem darin eingebrachten biologisch abbaubaren Feststoff ausgebildet ist.

Das biologisch abbaubare Material kann sich auch einem oder mehreren biologisch abbaubaren Kunststoffen und einem oder mehreren darin eingebrachten biologisch abbaubaren Feststoff zusammensetzen. Dabei besteht die Möglichkeit, in einen biologisch abbaubaren Kunststoff mehrere biologisch abbaubare Feststoffe einzubringen. Darüber hinaus können auch in mehrere biologisch abbaubare Kunststoffe mehrere biologisch abbaubare Feststoffe eingebracht werden.

Biologisch abbaubare Kunststoffe können beispielsweise aus wenigstens einem Polylactid ausgebildet sein. Polylactide sind Polyester, welche nicht natürlich vorkommen. Die Herstellung des Polylactids erfolgt durch eine mehrstufige Synthese aus Zucker. Dabei wird der Zucker zu einer Milchsäure fermentiert. Aus der Milchsäure wird durch Polymerisierung Polylactid hergestellt. Polylactide sind biologisch abbaubar, jedoch sind für deren Abbau bestimmte Umweltbedingungen nötig. Diese Umweltbedingungen erfüllen beispielsweise industrielle Kompostieranlagen.

Der wenigstens eine dem biologisch abbaubaren Kunststoff zugegebene Feststoff kann beispielsweise Hanf, Kork und/oder Holzmehl sein. Trotz dem Vorliegen des wenigstens einen Feststoffes in dem biologisch abbaubaren Material ist infolge der oben angegebenen Bedingung, nach welcher das Produkt aus der ersten Streifenbreite und dem Verhältnis der ersten Wanddicke zu der zweiten Wanddicke in einem Bereich von 2 mm bis 50 mm unter der Bedingung, dass die verwendeten Maßeinheiten gleich sind, liegt, das jeweilige zur Ausbildung des Behältnisses verwendete biologisch abbaubare Material ausreichend fließfähig, sodass in dem Behältnis keine Fehlstellen ausgebildet werden.

Aufgrund dessen, dass das Behältnis aus biologisch abbaubarem Material ausgebildet ist, kann dieses infolge von Wechselwirkungen mit Mikroorganismen, beispielsweise im Erdboden zersetzt werden und ist somit gegenüber konventionellen Kunststoffen kompostierbar. Besonders dünnwandige Behältnisse aus biologisch abbaubarem Material besitzen zudem die positive Eigenschaft, dass diese gegenüber dickwandigen Behältnissen aus biologisch abbaubarem Material schneller beispielsweise im Erdboden oder im Kompost zersetzt werden.

Ist das erfindungsgemäße Behältnis beispielsweise ein Pflanztopf oder Pflanzkasten aus biologisch abbaubarem Material ist, kann es beispielsweise zur Aufzucht von Jungpflanzen direkt mit der Jungpflanze zusammen in den Erdboden eingesetzt werden. Dadurch wird eine durch die Entnahme der Pflanze aus dem Behältnis resultierende Beschädigung beispielsweise des Wurzelwerkes der Pflanze vermieden. Das Behältnis kann aufgrund seiner Zusammensetzung aus biologisch abbaubarem Material in dem Erdboden verbleiben und verrottet nach einer gewissen Zeit.

Ist das erfindungsgemäße Behältnis aus dem oben beschriebenen kompostierbaren Material ausgebildet, können dieses anstelle bisher genutzter nicht kompostierbarer Behältnisse verwendet werden und direkt nach Gebrauch einer Kompostierung beispielsweise in einer Kompostieranlagen zugeführt werden. Dort müssen beispielsweise weniger Siebvorgänge zur Herstellung von Humuskompost, in welchen die kompostierbaren Materialien und nicht kompostierbaren Materialien voneinander getrennt werden, angesetzt werden. Dies kann zu einer Minderung des Ausstoßes von umweltschädlichen Gasen führen, welche infolge des Betriebes von beispielsweise brennstoffbetriebenen Siebanlagen entstehen.

Infolge der Zugabe von Feststoffen aus biologisch abbaubarem Material kann die Steifigkeit und Festigkeit des Behältnisses erhöht werden. Einem Zerbrechen bei Einwirkung von beispielsweise geringfügigen Stoßkräften wird somit entgegen gewirkt.

In einer weiteren vorteilhaften Ausführungsform der vorliegenden Erfindung ist der wenigstens eine Feststoff zu 20 bis 25 Gew.-% in dem biologisch abbaubaren Material des Behältnisses enthalten.

Sofern der wenigstens eine Feststoff zu 20 bis 25 Gew.-% in dem biologisch abbaubarem Material enthalten ist, besitzt ein zur Herstellung des erfindungsgemäßen Behältnisses verwendetes Spritzgießmaterial, welches sich aus dem wenigstens einen biologisch abbaubaren Feststoff und dem wenigstens einen biologisch abbaubaren Kunststoff zusammensetzt, immer noch ausreichend gute Fließeigenschaften, wobei keine Fehlstellen ausgebildet werden.

Um das Behältnis trotz geringer Wandstärke in besonders hoher Qualität herstellen zu können, liegt in einer weiteren vorteilhaften Ausführungsform des erfindungsgemäßen Behältnisses das Produkt aus der ersten Streifenbreite und dem Verhältnis der ersten Wanddicke zu der zweiten Wanddicke unter der Bedingung, dass die erste Streifenbreite, die erste Wanddicke und die zweite Wanddicke in mm angegeben sind, in einem Bereich von 3 mm bis 30 mm.

Besonders hochqualitative Pflanztöpfe können in einer bevorzugten Ausführungsform der vorliegenden Erfindung erzielt werden, wenn das Produkt aus der ersten Streifenbreite und dem Verhältnis der ersten Wanddicke zu der zweiten Wanddicke unter der Bedingung, dass die erste Streifenbreite, die erste Wanddicke und die zweite Wanddicke in mm angegeben sind, in einem Bereich von 6 mm bis 10 mm, besonders bevorzugt in einem Bereich von 4 mm bis 10 mm, liegt.

In einer weiteren vorteilhaften Ausführungsform der Erfindung weist der Boden des Behältnisses um eine oder mehrere ausgebildete Angussstellen innerhalb einer Aufstellfläche des Behältnisses liegende, strahlenförmig ausgerichtete Fußsegmente und in radialer Richtung mit den Fußsegmenten abwechselnde, parallel zu der Aufstellfläche liegende, strahlenförmig ausgerichtete und in Höhenrichtung des Behältnisses zu den Fußsegmenten durch jeweils einen Absatz versetzte Ablagesegmente auf, wobei die Fußsegmente und die Ablagesegmente mit den zweiten Materialstreifen verbunden sind und die Absätze an die ersten Materialstreifen angrenzen.

Während des Spritzgießprozesses des Behältnisses fließt das Spritzgießmaterial zunächst durch einen Bereich einer Form, in welchem der Boden ausgebildet wird, und fließt dann in einen Bereich, in welchem die Wand des Behältnisses ausgebildet wird. Der Bereich der Form, in welchem der Boden ausgebildet wird, verfügt über mindestens einen Anguss, durch den das Spritzgießmaterial in die Form eingebracht wird. An diesem Anguss wird die am Behältnis sichtbare Angussstelle erzeugt.

Auf gleicher Höhe mit der Angussstelle können sich die Bereiche befinden, in welchen die Ablagesegmente ausgebildet werden. In dieser Ausführungsform der Erfindung sind die Bereiche, in welchen die Ablagesegmente ausgebildet werden, durch die Absätze zu den Bereichen, in welchen die Fußsegmente ausgebildet werden, versetzt. Die Bereiche, in welchen die Fußsegmente des Behältnisses ausgebildet werden, liegen auf einer Aufstellfläche, auf der das Behältnis aufgestellt wird. Sowohl die Bereiche, in welchen die Ablagesegmente ausgebildet werden, als auch die Bereiche, in welchen die Fußsegmente gebildet werden, sind bei dieser Ausführungsform der Erfindung ausgehend von der Angussstelle bis hin zu dem Bereich, in welchem die Wand des Behältnisses ausgebildet wird, strahlenförmig ausgebildet. Der fertig ausgebildete Boden kann zudem mit Löchern in den Fußsegmenten und Ablagesegmenten versehen sein.

Durch die strahlenförmige Ausbildung der Fußsegmente wird ein sicherer Stand des Behältnisses auf der entsprechenden Aufstellfläche ermöglicht. Die zu den Fußsegmenten versetzten Auflagesegmente dienen zur optimalen Bewässerung, indem beispielsweise eine in dem Behältnis befindliche Pflanze nicht dauerhaft überschüssigem, nicht durch die Wurzeln aufgenommenen Wasser ausgesetzt wird. Das überschüssige, nicht durch die Wurzeln der Pflanze aufgenommene Wasser sammelt sich vorzugsweise in den Fußsegmenten.

In den Fußsegmenten sind vorzugsweise Löcher ausgebildet, über welche Wasser ablaufen kann.

Zudem ist vorteilhaft, dass das Wurzelwerk der Pflanze geschützt wird, indem die Pflanze samt Wurzeln beim Einsetzen in das Behältnis zunächst auf der Ablagefläche platziert wird. Ein direkter Bodenkontakt des Wurzelwerkes mit der Aufstellfläche wird somit zunächst vermieden.

Durch Einbringung von Löchern in die Ablagesegmente und die Fußsegmente des Bodens werden Wasseransammlungen in dem Behältnis vermieden.

Ein weiterer Vorteil dieser Form des Bodens ist, dass die auszubildenden Absätze, welche gegenüber den auszubildenden Ablagesegmenten und auszubildenden Fußsegmenten eine geringere Breite aufweisen, beim Spritzgießen schnell ausgebildet werden, wodurch das weiter kontinuierlich zugegebene Spritzgießmaterial zuverlässig hin zu den auszubildenden ersten Materialstreifen gelangt.

Die Aufgabe wird ferner durch eine Spritzgießvorrichtung zur Herstellung wenigstens eines Behältnisses gelöst, wobei die Spritzgießvorrichtung eine Form mit einem ersten Hohlraum aufweist, wobei der erste Hohlraum, ausgehend von einem zweiten Hohlraum der Spritzgießvorrichtung bis zu einem Hohlraumrand des ersten Hohlraumes, einander abwechselnde und in Übergangsabschnitten seitlich miteinander verbundene, erste und zweite Hohlraumabschnitte aufweist, wobei die ersten Hohlraumabschnitte eine erste Abschnittsbreite und eine erste Abschnittsdicke aufweisen, und die zweiten Hohlraumabschnitte Fließhilfen sind und eine zweite Abschnittsbreite und eine zweite Abschnittsdicke aufweisen, wobei die zweite Abschnittsdicke größer als die erste Abschnittsdicke ist, die zweite Abschnittsbreite größer als die zweite Abschnittsdicke ist, die zweite Abschnittsdicke ≤ dem Doppelten der ersten Abschnittsdicke ist und das Produkt aus der ersten Abschnittsbreite und dem Verhältnis der ersten Abschnittsdicke zu der zweiten Abschnittsdicke unter der Bedingung, dass die erste Abschnittsbreite, die erste Abschnittsdicke und die zweite Abschnittsdicke in mm angegeben sind, in einem Bereich von 2 mm bis 50 mm liegt.

Der erste Hohlraum ist in einer bevorzugten Ausführungsform der Erfindung zylindrisch oder trapezstumpfförmig ausgebildet.

Die Form der erfindungsgemäßen Spritzgießvorrichtung weist den ersten und den zweiten Hohlraum auf. In dem ersten Hohlraum wird die Wand eines Behältnisses ausgebildet. In dem zweiten Hohlraum wird der Boden dieses Behältnisses ausgebildet.

Der erste Hohlraum, welcher zylindrisch oder trapezstumpfförmig ausgebildet ist, weist die unterschiedlichen ersten und zweiten Hohlraumabschnitte auf, zwischen welchen jeweils die Übergangsabschnitte ausgebildet sind. Alle ersten Hohlraumabschnitte weisen jeweils eine gleiche erste Abschnittsform auf. Alle zweiten Hohlraumabschnitte weisen eine jeweils gleiche zweite Abschnittsform auf. Die stetig abwechselnden ersten und zweiten Hohlraumabschnitte sind in den Übergangsabschnitten miteinander verbunden.

In den ersten Hohlraumabschnitten werden die ersten Materialstreifen der Wand des Behältnisses ausgebildet, während die zweiten Hohlraumabschnitte Fließhilfen sind, in welchen die zweiten Materialstreifen der Wand des Behältnisses ausgebildet werden. Die Übergangsbereiche zwischen den ersten und den zweiten Materialstreifen der Wand des Behältnisses werden in den Übergangsabschnitten ausgebildet.

Ausgehend von einem der Angussstelle gegenüber liegenden Hohlraumende der Spritzgießvorrichtung kann die Abschnittsbreite der ersten und zweiten Hohlraumabschnitte bis hin zum zweiten Hohlraum abnehmen, zunehmen oder gleich bleiben. Die erste Abschnittsbreite der ersten Hohlraumabschnitte kann kleiner, größer oder gleich der zweiten Abschnittsbreite der zweiten Hohlraumabschnitte sein.

Der erste Hohlraum ist mit dem zweiten Hohlraum verbunden. Vorzugsweise verlaufen die ersten und die zweiten Hohlraumabschnitte geradlinig beginnend von dem Hohlraumende, in welchem der Öffnungsrand des Behältnisses ausgebildet wird, bis hin zum zweiten Hohlraum, in welchem der Boden des Behältnisses ausgebildet wird.

Die ersten und die zweiten Hohlraumabschnitte unterscheiden sich untereinander in der Abschnittsdicke. Die zweiten Hohlraumabschnitte weisen gegenüber den ersten Hohlraumabschnitten eine größere Abschnittsdicke auf. Die Übergangsabschnitte weisen eine dritte Abschnittsdicke auf, die sich jeweils ausgehend von dem zweiten Hohlraumabschnitt bis hin zum ersten Hohlraumabschnitt verringert.

Die zweiten Hohlraumabschnitte sind Fließhilfen. Sie sind dadurch gekennzeichnet, dass die zweite Abschnittsbreite größer als die zweite Abschnittsdicke der zweiten Hohlraumabschnitte ist und die zweite Abschnittsdicke der zweiten Hohlraumabschnitte ≤ dem Doppelten der ersten Abschnittsdicke der ersten Hohlraumabschnitte ist.

Die zweiten Hohlraumabschnitte sind mit den Eintrittspunkten des Spritzgießmaterials in die Spritzgießvorrichtung verbundene Strukturen, mit welchen das Fließen des Spritzgießmaterials in der Spritzgießvorrichtung vereinfacht und das Füllen kritischer Bereiche im verwendeten Formteil ermöglicht wird. So kann bei der vorliegenden Erfindung durch die speziell dimensionierten zweiten Hohlraumabschnitte ein Behältnis mit insgesamt dünnen Wandstärken gespritzt werden.

Beidseitig der zweiten Hohlraumabschnitte geht deren zweite Abschnittsdicke in Umfangsrichtung in die erste Abschnittsdicke der flächigen, schmalen, ersten Hohlraumabschnitte über. Dieser Übergang zwischen den Hohlraumabschnitten ist über eine Länge von ≤ 2 mm abgeschlossen.

Während des Spritzgießens des Behältnisses wird das Spritzgießmaterial in den zweiten Hohlraum des Behältnisses gespritzt. Infolge des Druckes, mit dem das Spritzgießmaterial in die Form gespritzt wird, fließt das Spritzgießmaterial aus dem zweiten Hohlraum in den ersten Hohlraum. Aufgrund der größeren zweiten Abschnittsdicke der zweiten Hohlraumabschnitte gegenüber der ersten Abschnittsdicke der ersten Hohlraumabschnitte breitet sich das Spritzgießmaterial in den zweiten Hohlraumabschnitten schneller aus als in den ersten Hohlraumabschnitten. In den zweiten Hohlraumabschnitten ist die Ausbreitungsgeschwindigkeit des Spritzgießmaterials höher als in den ersten Hohlraumabschnitten. Der Grund für die erhöhte Ausbreitungsgeschwindigkeit des Spritzgießmaterials in den zweiten Hohlraumabschnitten ist die größere zweite Abschnittsdicke im Vergleich zu der ersten Abschnittsdicke der ersten Hohlraumabschnitte. Zusätzlich zu dem Materialfluss des Spritzgießmaterials aus dem zweiten Hohlraum in die ersten Hohlraumabschnitte breitet sich das Spritzgießmaterial aus den zweiten Hohlraumabschnitten über die Übergangsabschnitte der Spritzgießvorrichtung in die ersten Hohlraumabschnitte aus.

Erfindungsgemäß erfolgt eine besonders schnelle Formfüllung sowie eine ausgeglichene Verteilung des Spritzgießmaterials in der Spritzgießvorrichtung dadurch, dass das Behältnis so dimensioniert ist, dass das Produkt aus der ersten Abschnittsbreite und dem Verhältnis der ersten Abschnittsdicke zu der zweiten Abschnittsdicke in einem Bereich von 2 mm bis 50 mm liegt, unter der Bedingung, dass die erste Abschnittsbreite, die erste Abschnittsdicke und die zweite Abschnittsdicke jeweils in mm angegeben sind. Das bedeutet, wenn die erste Abschnittsdicke durch die zweite Abschnittsdicke dividiert wird und der daraus resultierende Quotient mit der ersten Abschnittsbreite multipliziert wird, dann darf zur Erfüllung der oben genannten Bedingung das Endergebnis - bei Verwendung gleicher Maßeinheiten, nämlich mm, - nicht kleiner als 2 mm und nicht größer als 50 mm sein.

Daraus ergibt sich eine Formel für einen Fließhilfenfaktor FHF, die das Verhältnis aus der ersten Abschnittsdicke $a_1$ der dünnen ersten Hohlraumabschnitte und der zweiten Abschnittsdicke $a_2$ der zweiten, als Fließhilfen fungierenden Hohlraumabschnitte sowie der Abschnittsbreite $l_1$ der ersten Hohlraumabschnitte, also der Länge der dünnen ersten Hohlraumabschnitte normal zur Fließhilfe, wie folgt widerspiegelt:

$$FHF = \frac{a_1}{a_2} \cdot l_1$$

wobei 2 mm $\leq$ FHF $\leq$ 50 mm ist.

Die erste Abschnittsdicke $a_1$, die zweite Abschnittsdicke $a_2$ und die erste Abschnittsbreite $l_1$ sind in dergleichen Maßeinheit, nämlich in Millimeter, angegeben.

Wenn sich das Endergebnis in dem oben genannten Bereich von 2 mm bis 50 mm befindet, sind die ersten und die zweiten Hohlraumabschnitte so dimensioniert, dass sich das Spritzgießmaterial schnell in der Spritzgießvorrichtung ausbreitet und alle ersten und zweiten Hohlraumabschnitte sowie die Übergangsabschnitte vollständig ausfüllt. Somit können mit der Spritzgießvorrichtung auch besonders dünnwandige Pflanztöpfe ohne Fehlstellen ausgebildet werden, wodurch trotz hoher Qualität der mit der Spritzgießvorrichtung herstellbaren Pflanztöpfe Spritzgießmaterial eingespart werden kann.

Befolgt man die erfindungsgemäße Anweisung zur Dimensionierung der Spritzgießvorrichtung, erspart man sich den Aufwand von Probeversuchen und die Ausbildung unterschiedlicher Formprototypen.

In einer Ausführungsform der vorliegenden Erfindung liegt das Produkt aus der ersten Abschnittsbreite und dem Verhältnis der ersten Abschnittsdicke zu der zweiten Abschnittsdicke in einem Bereich von 3 mm bis 30 mm, unter der Bedingung, dass die erste Abschnittsbreite, die erste Abschnittsdicke und die zweite Abschnittsdicke jeweils in mm angegeben sind.

In einer bevorzugten Ausführungsform der Spritzgießvorrichtung zur Herstellung wenigstens eines Behältnisses liegt das Produkt aus der ersten Abschnittsbreite und dem Verhältnis der ersten Abschnittsdicke zu der zweiten Abschnittsdicke unter der Bedingung, dass die erste Abschnittsbreite, die erste Abschnittsdicke und die zweite Abschnittsdicke jeweils in mm angegeben sind, in einem Bereich von 6 mm bis 10 mm, besonders bevorzugt in einem Bereich von 4 mm bis 10 mm.

Wird diese Bedingung eingehalten, erreicht man beim Spritzgießen des jeweiligen Behältnisses eine vollständige und schnelle Formfüllung der Spritzgießvorrichtung. Dabei ist es bei Anwendung dieser Spritzgießvorrichtung möglich, die Wände des Behältnisses besonders dünn auszubilden.

In einer weiteren Ausführungsform der erfindungsgemäßen Spritzgießvorrichtung weist der zweite Hohlraum einen mittig ausgebildeten Anguss sowie strahlenförmig ausgerichtete erste Segmente und in radialer Richtung mit den ersten Segmenten abwechselnde, parallel zu einer Bodenfläche liegende, strahlenförmig ausgerichtete und in Höhenrichtung des zweiten Hohlraumes zu den ersten Segmenten durch jeweils einen Formabsatz versetzte zweite Segmente auf, wobei die ersten Segmente und die zweiten Segmente mit den zweiten Hohlraumabschnitten verbunden sind und die Formabsätze an die ersten Hohlraumabschnitte angrenzen.

Während des Spritzgießprozesses des Behältnisses fließt das Spritzgießmaterial zunächst ausgehend von dem Anguss in den zweiten Hohlraum, der die Form des Bodens des Behältnisses vorgibt. Auf gleicher Höhe mit dem Anguss können sich die zweiten Segmente des zweiten Hohlraums befinden. Die zweiten Segmente sind durch Formabsätze zu den ersten Segmenten versetzt. Sowohl die ersten Segmente als auch die zweiten Segmente erstrecken sich vorzugsweise ausgehend von dem Anguss bis hin zu dem ersten Hohlraum.

Ein wesentlicher Vorteil dieser Ausführungsform der Erfindung ist die Minimierung der Herstellungsdauer durch die entsprechende Form des zweiten Hohlraums. Die Formen der ersten und zweiten Segmente sowie der Formabsätze ermöglichen eine hohe Ausbreitungsgeschwindigkeit des Spritzgießmaterials in dem zweiten Hohlraum. Dadurch gelangt das Spritzgießmaterial umso schneller in den ersten Hohlraum und kann diesen homogen füllen. Durch die Verringerung der Herstellungsdauer werden die Produktionskosten gesenkt.

Darüber hinaus werden durch diese Gestaltung des zweiten Hohlraumes besonders vorteilhafte Fußsegmente mit dazwischen liegenden Ablagesegmenten des Behältnisses ausgebildet, welche eine gute Entwässerung und Belüftung des Behältnisses ermöglichen.

Eine bevorzugte Ausführungsform der vorliegenden Erfindung, deren Aufbau, Funktion und Vorteile wird im Folgenden anhand von Figuren näher erläutert, wobei

Figur 1 schematisch eine Ausführungsform eines erfindungsgemäßen Behältnisses in einer Seitenansicht zeigt; und

Figur 2 schematisch das Behältnis aus Figur 1 in einer Querschnittsansicht zeigt.

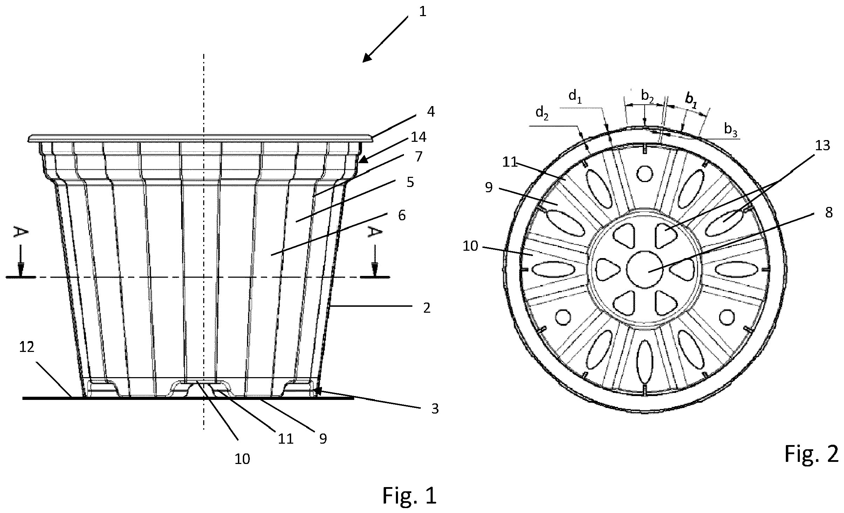

Figur 1 zeigt eine Ausführungsform eines erfindungsgemäßen Behältnisses 1 in einer Seitenansicht. Figur 2 zeigt das Behältnis 1 aus Figur 1 in einer Querschnittsansicht entlang der Schnittlinie A - A von Figur 1. Das Behältnis 1 ist in den gezeigten Figuren ein Pflanztopf, kann jedoch in anderen, nicht gezeigten Ausführungsformen der Erfindung auch ein anderer spritzgegossener Gegenstand, wie beispielsweise ein Trinkbecher oder ein Pflanzkasten, sein.

In der gezeigten Ausführungsform besitzt das Behältnis 1 einen kreisrunden Querschnitt. In anderen Ausführungsformen der Erfindung kann das jeweilige Behältnis auch einen rechteckigen Querschnitt aufweisen.

Das Behältnis 1 weist eine Wand 2 und einen Boden 3 auf. Die Wand 2 und der Boden 3 sind miteinander verbunden.

Die Wand 2 weist in dem gezeigten Ausführungsbeispiel einen kreisrunden Querschnitt auf. In anderen Ausführungsformen der Erfindung kann die Wand 2 auch einen ovalen, dreieckigen, rechteckigen oder vieleckigen Querschnitt aufweisen. Der Querschnitt kann auch wellig ausgebildet und/oder unsymmetrisch sein.

Die Wand 2 weist erste Materialstreifen 5 und zweite Materialstreifen 6 auf. Diese sind in Übergangsbereichen 7 seitlich miteinander verbunden. Ausgehend von einem Öffnungsrand 4 des Behältnisses 1 verlaufen die ersten Materialstreifen 5 und die zweiten Materialstreifen 6 geradlinig bis zu dem Boden 3 des Behältnisses 1.

Die ersten Materialstreifen 5 weisen eine erste Streifenbreite $b_1$ und eine erste Wanddicke $d_1$ auf. Die zweiten Materialstreifen 6 weisen eine zweite Streifenbreite $b_2$ und eine zweite Wanddicke $d_2$ auf. In dem gezeigten Ausführungsbeispiel nehmen die erste Streifenbreite $b_1$ der ersten Materialstreifen 5 und die zweite Streifenbreite $b_2$ der zweiten Materialstreifen 6 ausgehend von dem Öffnungsrand 4 bis hin zum Boden 3 ab. In weiteren, nicht aufgeführten Ausführungsformen der Erfindung können die erste Streifenbreite $b_1$ der ersten Materialstreifen 5 und die zweite Streifenbreite $b_2$ der zweiten Materialstreifen 6 ausgehend von dem Öffnungsrand 4 bis hin zum Boden 3 zunehmen oder gleich bleiben.

Der Kreisdurchmesser der gezeigten Ausführungsform des Behältnisses 1 nimmt ausgehend von dem Öffnungsrand 4 bis hin zum Boden 3 kontinuierlich ab. Dabei weist der Öffnungsrand 4 einen größeren Kreisdurchmesser auf als der Boden 3. Die Wand 2 der gezeigten Ausführungsform weist in einem Bereich 14 unterhalb des Öffnungsrandes 4 unterschiedliche Kreisdurchmesser auf. In weiteren, nicht aufgeführten Anführungsformen kann der Kreisdurchmesser in diesem Bereich 14 gleich bleiben.

Der Boden 3 des Behältnisses 1 weist eine Vielzahl von Fußsegmenten 9 und Ablagesegmenten 10 auf. Die Fußsegmente 9 und die Ablagesegmente 10 sind seitlich durch Absätze 11 miteinander verbunden. Die Fußsegmente 9 bilden gemeinsam eine Auflage, mit der sie auf einer Aufstellfläche 12 stehen können. Die Ablagesegmente 10 sind in einem bestimmten Abstand parallel zu den Fußsegmenten 9 des Behältnisses 1 in der Höhe versetzt. Die Fußsegmente 9 und die Ablagesegmente 10 sind mit den ersten Materialstreifen 5 und den zweiten Materialstreifen 6 verbunden. Die Absätze 11 zwischen den Fußsegmenten 9 und den Ablagesegmenten 10 sind nur mit den ersten Materialstreifen 5 verbunden. Um eine Angussstelle 8 im Boden 3 des erfindungsgemäßen Behältnisses 1 sind die Fußsegmente 9 und die Ablagesegmente 10 strahlenförmig ausgebildet.

In der dargestellten Ausführungsform weisen die Fußsegmente 9 und die Ablagesegmente 10 Löcher 13 auf. Um die Angussstelle 8 sind die Löcher 13 radial angeordnet.

Das gezeigte Behältnis 1 ist so dimensioniert, dass folgende Bedingung erfüllt ist:

$$FHF = \frac{d_1}{d_2} \cdot b_1$$

wobei FHF ein Fließhilfenfaktor, $d_1$ die erste Wanddicke der dünnwandigen ersten Materialstreifen 5, $d_2$ der zweiten Wanddicke der als Fließhilfenmaterialstreifen fungierenden zweiten Materialstreifen 6 und $b_1$ die Streifenbreite der ersten Materialstreifen 5 ist und 2 mm $\leq$ FHF $\leq$ 50 mm ist.

Die zweiten Materialstreifen 6 fungieren als Fließhilfenmaterialstreifen. Dabei ist die zweite Streifenbreite $b_2$ der zweiten Materialstreifen 6 größer als die zweite Wanddicke $d_2$ der zweiten Materialstreifen 6. Ferner ist die zweite Wanddicke $d_2$ der zweiten Materialstreifen 6 $\leq$ dem Doppelten der ersten Wanddicke $d_1$ der ersten Materialstreifen 5.

In dem beispielhaft gezeigten, konkreten Ausführungsbeispiel betragen:

$d_1$ = 0,51 mm,
$d_2$ = 0,81 mm,
$b_1$ = 11,23 mm,

$b_2$ = 11,64 mm und
FHF = 7,329 mm,

wobei in anderen Ausführungsformen der Erfindung auch andere Werte verwendeten werden können.

Zudem beträgt in dem gezeigten Ausführungsbeispiel die Übergangslänge $b_3$ zwischen den ersten Materialstreifen 5 und den zweiten Materialstreifen 6 0,75 mm, ist also kleiner als 2 mm.

## Patentansprüche

1. Behältnis (1), das spritzgegossen ist und dessen Wand (2) von einem Boden (3) des Behältnisses bis zu einem Öffnungsrand (4) des Behältnisses verlaufende, einander abwechselnde erste (5) und zweite Materialstreifen (6) aufweist, wobei die ersten Materialstreifen (5) eine erste Streifenbreite ($b_1$) und eine erste Wanddicke ($d_1$) und die zweiten Materialstreifen (6) eine zweite Streifenbreite ($b_2$) und eine zweite Wanddicke ($d_2$) aufweisen, wobei die zweite Wanddicke ($d_2$) größer als die erste Wanddicke ($d_1$) ist, und wobei die ersten und die zweiten Materialstreifen in Übergangsbereichen (7) seitlich miteinander verbunden sind,
**dadurch gekennzeichnet, dass** die zweite Streifenbreite ($b_2$) größer als die zweite Wanddicke ($d_2$) ist, die zweite Wanddicke ($d_2$) ≤ dem Doppelten der ersten Wanddicke ($d_1$) ist und das Produkt aus der ersten Streifenbreite ($b_1$) und dem Verhältnis der ersten Wanddicke ($d_1$) zu der zweiten Wanddicke ($d_2$) unter der Bedingung, dass die erste Streifenbreite ($b_1$), die erste Wanddicke ($d_1$) und die zweite Wanddicke ($d_2$) in mm angegeben sind, in einem Bereich von 2 mm bis 50 mm liegt.

2. Behältnis nach Anspruch 1, **dadurch gekennzeichnet, dass** das Behältnis (1) aus biologisch abbaubarem Material ausgebildet ist, das aus wenigstens einem biologisch abbaubaren Kunststoff und wenigstens einem darin eingebrachten biologisch abbaubaren Feststoff ausgebildet ist.

3. Behältnis nach Anspruch 2, **dadurch gekennzeichnet, dass** der wenigstens eine Feststoff zu 20 bis 25 Gew.-% in dem biologisch abbaubaren Material enthalten ist.

4. Behältnis nach einem der vorhergehenden Ansprüche, **dadurch gekennzeichnet, dass** das Produkt aus der ersten Streifenbreite ($b_1$) und dem Verhältnis der ersten Wanddicke ($d_1$) zu der zweiten Wanddicke ($d_2$), unter der Bedingung, dass die erste Streifenbreite ($b_1$), die erste Wanddicke ($d_1$) und die zweite Wanddicke ($d_2$) in mm angegeben sind, in einem Bereich von 3 mm bis 30 mm liegt.

5. Behältnis nach einem der vorhergehenden Ansprüche, **dadurch gekennzeichnet, dass** das Produkt aus der ersten Streifenbreite ($b_1$) und dem Verhältnis der ersten Wanddicke ($d_1$) zu der zweiten Wanddicke ($d_2$), wobei die erste Streifenbreite ($b_1$), die erste Wanddicke ($d_1$) und die zweite Wanddicke ($d_2$) in mm angegeben sind, in einem Bereich von 6 mm bis 10 mm liegt.

6. Behältnis nach einem der vorhergehenden Ansprüche, **dadurch gekennzeichnet, dass** das Produkt aus der ersten Streifenbreite ($b_1$) und dem Verhältnis der ersten Wanddicke ($d_1$) zu der zweiten Wanddicke ($d_2$), wobei die erste Streifenbreite ($b_1$), die erste Wanddicke ($d_1$) und die zweite Wanddicke ($d_2$) in mm angegeben sind, in einem Bereich von 4 mm bis 10 mm liegt.

7. Behältnis nach einem der vorhergehenden Ansprüche, **dadurch gekennzeichnet, dass** der Boden (3) des Behältnisses um eine mittig des Bodens (3) ausgebildete Angussstelle (8) innerhalb einer Aufstellfläche (12) des Behältnisses liegende, strahlenförmig ausgerichtete Fußsegmente (9) und in radialer Richtung mit den Fußsegmenten (9) abwechselnde, parallel zu der Aufstellfläche (12) liegende, strahlenförmig ausgerichtete und in Höhenrichtung des Behältnisses (1) zu den Fußsegmenten (9) durch jeweils einen Absatz (11) versetzte Ablagesegmente (10) aufweist, wobei die Fußsegmente (9) und die Ablagesegmente (10) mit den zweiten Materialstreifen (6) verbunden sind und die Absätze (11) an die ersten Materialstreifen (5) angrenzen.

8. Spritzgießvorrichtung zur Herstellung wenigstens eines Behältnisses (1), wobei die Spritzgießvorrichtung eine Form mit einem ersten Hohlraum aufweist, wobei der erste Hohlraum, ausgehend von einem zweiten Hohlraum der Spritzgießvorrichtung bis zu einem Hohlraumrand des ersten Hohlraumes, einander abwechselnde und in Übergangsabschnitten seitlich miteinander verbundene, erste und zweite Hohlraumabschnitte aufweist, wobei die ersten Hohlraumabschnitte eine erste Abschnittsbreite und eine erste Abschnittsdicke aufweisen, und die zweiten Hohlraumabschnitte Fließhilfen sind und eine zweite Abschnittsbreite und eine zweite Abschnittsdicke aufweisen, wobei die zweite Abschnittsdicke größer als die erste Abschnittsdicke ist, **dadurch gekennzeichnet,**
**dass** die zweite Abschnittsbreite größer als die zweite Abschnittsdicke ist, die zweite Abschnittsdicke ≤ dem Doppelten der ersten Abschnittsdicke ist und das Produkt aus der ersten Abschnittsbreite und dem Verhältnis der ersten Abschnittsdicke zu der zweiten Abschnittsdicke unter der Bedingung, dass die erste Abschnittsbreite, die erste Abschnittsdicke und die zweite Abschnittsdicke in mm angegeben sind, in einem Bereich von 2 mm bis 50 mm liegt.

9. Spritzgießvorrichtung nach Anspruch 8, **dadurch gekennzeichnet, dass** das Produkt aus der ersten Abschnittsbreite und dem Verhältnis der ersten Abschnittsdicke zu der zweiten Abschnittsdicke unter der Bedingung, dass die erste Abschnittsbreite, die erste Abschnittsdicke und die zweite Abschnittsdicke in mm angegeben sind, in einem Bereich von 3 mm bis 30 mm liegt.

10. Spritzgießvorrichtung nach Anspruch 8 oder 9, **dadurch gekennzeichnet, dass** das Produkt aus der ersten Abschnittsbreite und dem Verhältnis der ersten Abschnittsdicke zu der zweiten Abschnittsdicke unter der Bedingung, dass die erste Abschnittsbreite, die erste Abschnittsdicke und die zweite Abschnittsdicke in mm angegeben sind, in einem Bereich von 6 mm bis 10 mm liegt.

11. Spritzgießvorrichtung nach einem der Ansprüche 8 bis 10, **dadurch gekennzeichnet, dass** das Produkt aus der ersten Abschnittsbreite und dem Verhältnis der ersten Abschnittsdicke zu der zweiten Abschnittsdicke unter der Bedingung, dass die erste Abschnittsbreite, die erste Abschnittsdicke und die zweite Abschnittsdicke in mm angegeben sind, in einem Bereich von 4 mm bis 10 mm liegt.

12. Spritzgießvorrichtung nach einem der Ansprüche 8 bis 11, **dadurch gekennzeichnet, dass** der zweite Hohlraum einen mittig ausgebildeten Anguss sowie strahlenförmig ausgerichtete erste Segmente und in radialer Richtung mit den ersten Segmenten abwechselnde, parallel zu einer Bodenfläche liegende, strahlenförmig ausgerichtete und in Höhenrichtung des zweiten Hohlraumes zu den ersten Segmenten durch jeweils einen Formabsatz versetzte zweite Segmente aufweist, wobei die ersten Segmente und die zweiten Segmente mit den zweiten Hohlraumabschnitten verbunden sind und die Formabsätze an die ersten Hohlraumabschnitte angrenzen.

Fig. 2

Fig. 1

**EP 3 936 300 A1**

| | Europäisches Patentamt |
|---|---|
| | European Patent Office |
| | Office européen des brevets |

# EUROPÄISCHER RECHERCHENBERICHT

Nummer der Anmeldung

EP 21 18 3998

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 842 419 A1 (HANDELSONDERNEMING VAN KRIMPEN [NL]) 10. Oktober 2007 (2007-10-10) | 1,4-6, 8-11 | INV. B29C45/00 A01G9/02 |
| Y | * Anspruch 12; Fig. 1-4 * | 2,3,7,12 | B29C45/37 |
| Y,D | WO 97/23334 A1 (MOESSNER EUGEN KARL [DE]) 3. Juli 1997 (1997-07-03) * Anspruch 1, 6; S. 5, Z. 18-S. 6, Z. 33; Fig. 1-3 * | 2,7,12 | ADD. B29L31/00 B29K105/00 |
| Y | DE 10 2016 107654 A1 (SPC SUNFLOWER PLASTIC COMPOSITE CO LTD) 26. Oktober 2017 (2017-10-26) * Anspruch 5; Tabelle 1; Para. [0030, 0031] * | 3 | |
| Y,D | JP 2006 001569 A (FUJI SEAL INT INC) 5. Januar 2006 (2006-01-05) * Fig. 1, 3-6, 9 * | 7,12 | |
| Y,D | DE 10 2012 103082 A1 (KNAUER HOLDING GMBH & CO KG [DE]) 17. Oktober 2013 (2013-10-17) * Fig. 1-3 * | 7,12 | **RECHERCHIERTE SACHGEBIETE (IPC)** B29C A01G |
| X | US 2019/061208 A1 (BOCKING CHRIS [GB] ET AL) 28. Februar 2019 (2019-02-28) * Anspruch 46; Fig. 1-8 * | 1,8 | B29K B29L |
| X | US 4 743 420 A (DUTT HERBERT V [US]) 10. Mai 1988 (1988-05-10) * Anspruch 15; Fig. 1, 5 * | 1,8 | |

Der vorliegende Recherchenbericht wurde für alle Patentansprüche erstellt

| Recherchenort | Abschlußdatum der Recherche | Prüfer |
|---|---|---|
| München | 22. November 2021 | Härtig, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 21 18 3998

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2021

| Im Recherchenbericht angeführtes Patentdokument | Datum der Veröffentlichung | Mitglied(er) der Patentfamilie | Datum der Veröffentlichung |
|---|---|---|---|
| EP 1842419 A1 | 10-10-2007 | AT 514333 T | 15-07-2011 |
| | | DK 1842419 T3 | 10-10-2011 |
| | | EP 1842419 A1 | 10-10-2007 |
| | | EP 2281441 A1 | 09-02-2011 |
| | | ES 2364366 T3 | 01-09-2011 |
| | | NL 1031540 C2 | 09-10-2007 |
| | | PL 1842419 T3 | 30-11-2011 |
| | | PT 1842419 E | 12-08-2011 |
| WO 9723334 A1 | 03-07-1997 | AT 189422 T | 15-02-2000 |
| | | DE 19548707 A1 | 26-06-1997 |
| | | EP 0868275 A1 | 07-10-1998 |
| | | ES 2142107 T3 | 01-04-2000 |
| | | GR 3032568 T3 | 31-05-2000 |
| | | JP 2000502619 A | 07-03-2000 |
| | | KR 19990076605 A | 15-10-1999 |
| | | PT 868275 E | 31-07-2000 |
| | | WO 9723334 A1 | 03-07-1997 |
| DE 102016107654 A1 | 26-10-2017 | BR 112018071890 A2 | 05-02-2019 |
| | | CA 3022181 A1 | 02-11-2017 |
| | | CN 109070410 A | 21-12-2018 |
| | | DE 102016107654 A1 | 26-10-2017 |
| | | EA 201892426 A1 | 29-03-2019 |
| | | EP 3448649 A1 | 06-03-2019 |
| | | JP 2019519411 A | 11-07-2019 |
| | | KR 20190003624 A | 09-01-2019 |
| | | US 2019144664 A1 | 16-05-2019 |
| | | WO 2017186743 A1 | 02-11-2017 |
| JP 2006001569 A | 05-01-2006 | JP 4477946 B2 | 09-06-2010 |
| | | JP 2006001569 A | 05-01-2006 |
| DE 102012103082 A1 | 17-10-2013 | CA 2869447 A1 | 17-10-2013 |
| | | DE 102012103082 A1 | 17-10-2013 |
| | | DK 2836347 T3 | 27-06-2016 |
| | | EP 2836347 A1 | 18-02-2015 |
| | | ES 2573836 T3 | 10-06-2016 |
| | | HU E029251 T2 | 28-02-2017 |
| | | PL 2836347 T3 | 30-09-2016 |
| | | US 2015060471 A1 | 05-03-2015 |
| | | WO 2013153142 A1 | 17-10-2013 |
| US 2019061208 A1 | 28-02-2019 | AU 2017214327 A1 | 09-08-2018 |
| | | BR 112018015623 A2 | 26-12-2018 |
| | | CA 3012552 A1 | 10-08-2017 |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT
ÜBER DIE EUROPÄISCHE PATENTANMELDUNG NR.**

EP 21 18 3998

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2021

| Im Recherchenbericht angeführtes Patentdokument | Datum der Veröffentlichung | Mitglied(er) der Patentfamilie | Datum der Veröffentlichung |
|---|---|---|---|
| | | CN 108778663 A | 09-11-2018 |
| | | EP 3393744 A1 | 31-10-2018 |
| | | GB 2548322 A | 20-09-2017 |
| | | GB 2548693 A | 27-09-2017 |
| | | GB 2559917 A | 22-08-2018 |
| | | JP 6942713 B2 | 29-09-2021 |
| | | JP 2019510842 A | 18-04-2019 |
| | | KR 20180107225 A | 01-10-2018 |
| | | SG 10202006653V A | 28-08-2020 |
| | | SG 11201806320P A | 30-08-2018 |
| | | US 2019061208 A1 | 28-02-2019 |
| | | US 2021069943 A1 | 11-03-2021 |
| | | WO 2017134181 A1 | 10-08-2017 |
| US 4743420 A | 10-05-1988 | JP 2537061 B2 | 25-09-1996 |
| | | JP S63132017 A | 04-06-1988 |
| | | US 4743420 A | 10-05-1988 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012103082 A1
- JP 2006001569 A

- WO 9723334 A1